# FASCICULE DE BREVET EUROPEEN

(11) **EP 2 921 607 B1**
(45) Date de publication et mention de la délivrance du brevet: **11.01.2017**
(21) Numéro de dépôt: 15154377.4
(22) Date de dépôt: 09.02.2015
(51) Int. Cl.: E04F 11/18

(54) **Dispositif de fixation d'un panneau dans un rail support**
Vorrichtung zum Befestigen eines Paneels in einer Halteschiene
Device for attaching a panel in a support rail

(30) Priorité: 26.02.2014 FR 1400483
(43) Date de publication de la demande: 23.09.2015
(73) Titulaire: SB Ingénierie, 74330 Poisy (FR)
(72) Inventeur: Giacometti, Sylviane, 74330 Choisy (FR); Dagand, Cyril, 74150 Rumilly (FR)
(74) Mandataire: Gevers & Orès

(56) Documents cités:
- EP-A1- 1 647 663
- WO-A2-2013/121330
- DE-A1-102009 008 307
- DE-U1-202007 009 239
- DE-U1-202010 016 187
- FR-A1- 2 930 270

## Description

### Domaine technique de l'invention

L'invention est relative à un dispositif de fixation d'un panneau dans une rainure de réception d'un rail support en forme de profilé en U s'étendant dans la direction longitudinale, ledit dispositif comprenant des moyens de calage coopérant avec deux vis de réglage pour assurer le maintien vertical du panneau dans la rainure du rail support, ladite rainure en U étant équipée d'un fond arrondi, et de deux rampes divergentes disposées au sommet des deux ailes opposées du profilé, - les moyens de calage ayant un berceau enfourchant le chant inférieur du panneau pour épouser la forme conjuguée du fond de la rainure en autorisant un mouvement de basculement de faible amplitude lors du réglage angulaire.

### État de la technique

Les documents EP 1647663, FR 2930270 et DE 102009008307 concernent des systèmes de réglage et de serrage à vis coopérant avec des cales en forme de coin ou de came pour ajuster la verticalité et le blocage d'un panneau en verre dans un profilé. Les opérations de réglage de la verticalité et de serrage du panneau restent néanmoins compliquées, et nécessitent l'usage de profilés ayant des structures spécifiques.

### Objet de l'invention

L'objet de l'invention consiste à réaliser un dispositif de fixation d'un panneau dans un rail, pouvant être ajusté angulairement et calé avec précision et rapidité pour obtenir un serrage bilatéral du panneau.

Le dispositif de fixation selon l'invention est caractérisé en ce que les moyens de calage comportent de chaque côté du panneau une première et une deuxième cale de positionnement, ladite première cale de positionnement de chaque côté coopérant avec le berceau, et ladite deuxième cale de positionnement de chaque côté étant apte à se déplacer le long de la rampe correspondante pour le serrage bilatéral du panneau après ledit réglage.

Le berceau et les deux paires de cales de positionnement constituent avec les deux vis de réglage, un module de calage, lequel peut être soit prémonté à la partie inférieure du panneau avant son insertion dans la rainure du profilé, soit être prépositionné dans le fond de la rainure afin de réceptionner par la suite le panneau.

L'amplitude de basculement du berceau est limitée par la mise en engagement des premières cales de positionnement contre les deux faces latérales de la rainure. Des butées sont configurées pour empêcher la remontée du berceau lors du serrage des vis de réglage.

Il est clair que le nombre de modules de calage est variable en fonction de la longueur du panneau.

Préférentiellement, la première cale de positionnement comprend un orifice dans lequel est prémontée la vis de réglage, et une extension engagée verticalement le long d'une rampe ménagée dans chacune des deux ailes du berceau.

Avantageusement, les deux cales de positionnement sont séparées verticalement l'une de l'autre par un espace de chaque côté du panneau, de manière à se déplacer par coulissement selon deux sens opposés lors du serrage de la vis de réglage.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue schématique en coupe de la partie inférieure d'un garde-corps utilisant le dispositif de fixation selon l'invention ;
- les figures 2A et 3A représentent des vues en élévation et de profil d'un dispositif de fixation de la figure 1 ;
- les figures 2B et 3B montrent le panneau équipé du dispositif de fixation avant sa mise en place dans la rainure du rail support ;
- les figures 4 et 5 sont des vues en coupe similaires à la figure 1, respectivement en fin d'insertion du panneau dans le rail, et lors du réglage angulaire ;
- la figure 6 illustre le serrage bilatéral du panneau en fin de vissage des deux vis ;
- la figure 7 est une vue identique de la figure 6 d'une variante de réalisation avec inversion des butées du berceau ;
- les figures 8 et 9 montrent des vues identiques des figures 2B et 3B, suite au montage préalable du dispositif de fixation dans la rainure du rail, sans le panneau.

### Description détaillée d'un exemple de réalisation

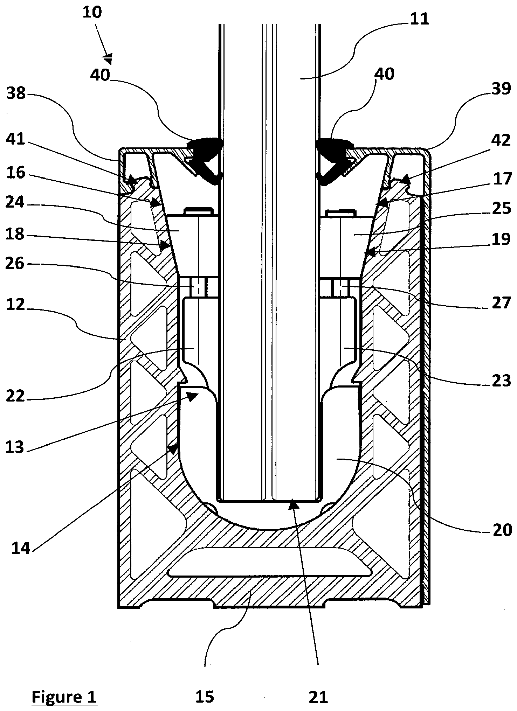

La figure 1 illustre une vue partielle d'un dispositif de fixation 13 d'un panneau 11 dans un rail support 12, notamment pour un garde-corps 10, ou tout autre type de paroi de séparation ou de sécurité. Dans le cas d'un garde-corps 10, le panneau 11 est préférentiellement en verre, et est maintenu verticalement dans le rail support 12 par le dispositif de fixation 13.

Le rail support 12 est formé à titre d'exemple par un profilé en aluminium, ayant une section transversale en U délimitant à l'intérieur, une rainure 14 de réception du panneau 11 et du dispositif de fixation 13. Le profilé s'étend de manière continue dans la direction longitudinale, et comporte une embase 15 horizontale destinée à prendre appui et à être solidarisée à une dalle ou structure en béton ou en pierre, ou métallique (non représentée).

Le fond de la rainure 14 présente une forme courbe concave, de préférence arrondie, prolongée par deux faces latérales 16, 17 internes agencées verticalement et parallèlement l'une à l'autre. La largeur de la rainure 14 entre les deux faces latérales 16, 17 est supérieure à l'épaisseur du panneau 11. Les deux faces latérales 16, 17 internes sont évasées au sommet du profilé de manière à former deux rampes 18, 19 terminales divergentes.

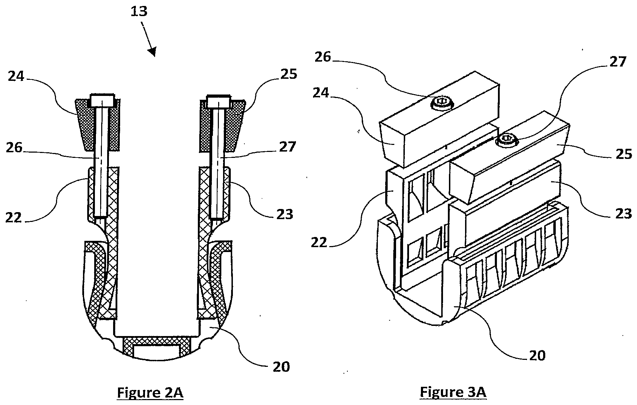

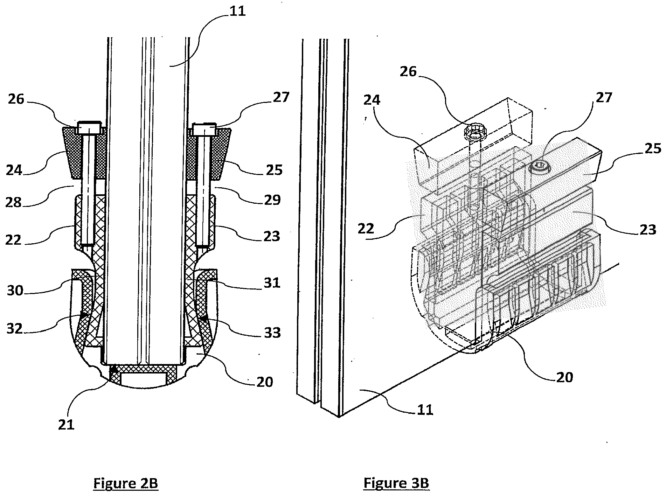

Sur les figures 2 et 3, le dispositif de fixation 13 comprend un berceau 20 enfourchant le chant inférieur 21 du panneau 11 pour autoriser un mouvement de basculement de faible amplitude lors du réglage de la verticalité du panneau 11 après son insertion dans le profilé. Le berceau 20 en forme de U, est en matière plastique, et est configuré pour épouser la forme conjuguée du fond du profilé, et pour combler le jeu transversal entre les faces opposées du panneau 11, et la partie inférieure de la rainure 14.

Au-dessus du berceau 20 se trouvent de chaque côté des faces opposées du panneau 11, une première cale de positionnement 22, 23 surmontée d'une deuxième cale de positionnement 24, 25 pouvant être ajustées dans le sens de la hauteur au moyen d'une vis de réglage 26, 27. Un espace 28, 29 sépare verticalement la première cale de positionnement 22, 23 de la deuxième cale de positionnement 24, 25. La vis de fixation 26, 27 traverse l'espace 28, 29, et comporte une extrémité filetée prémontée dans un orifice taraudé de la première cale de positionnement 22, 23. Cette dernière est prolongée par une extension 30, 31 venant en engagement avec une rampe 32, 33 ménagée dans chacune des deux ailes du berceau 20.

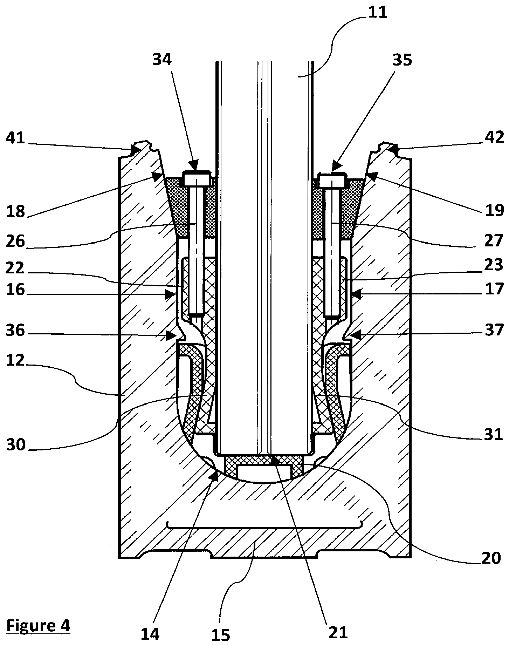

Sur la figure 4, chaque deuxième cale de positionnement 24, 25 est dotée d'une face plane interne venant en contact avec la face latérale correspondante du panneau 11, et une face externe inclinée apte à coopérer avec la rampe 18, 19 du profilé. La vis de réglage 26, 27 traverse la deuxième cale de positionnement 24, 25, et la tête 34, 35 de la vis est logée dans un lamage situé dans la face supérieure de ladite deuxième cale.

Les différentes cales de positionnement 22 à 25 sont réalisées en un matériau plastique, et sont prémontées avec le berceau 20 et les deux vis de réglage 26, 27 pour constituer un module de calage servant au maintien du du panneau 11. Il est clair que le nombre de modules de calage peut varier en fonction de la longueur du panneau 11.

Les opérations de réglage et de calage du panneau 11 au moyen du dispositif de fixation 13 s'effectuent de la manière suivante :
Sur la figure 4, le panneau 11 équipé du module de calage des figures 2 et 3 est inséré par coulissement dans la rainure 14 du profilé en aluminium du rail support 12. Le module de calage glisse le long des faces internes de la rainure 14, et permet un prépositionnement vertical du panneau 11 dans le rail support 12. Le berceau 20 est sollicité contre le fond par le poids du panneau 11, et les deuxièmes cales de positionnement 24, 25 se trouvent en engagement avec les rampes 18, 19 du profilé.

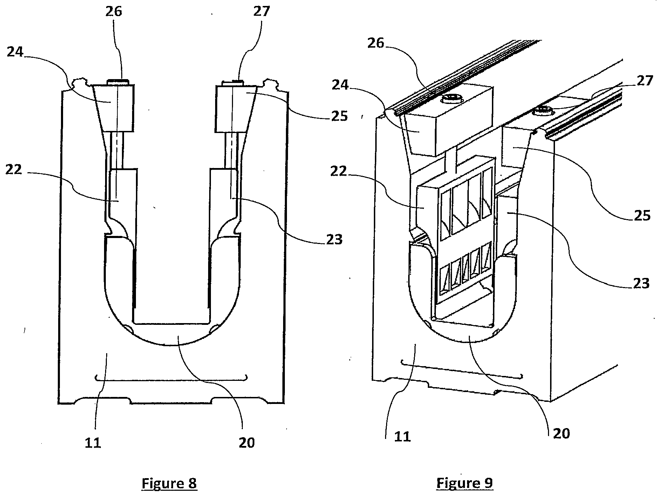

Selon la variante des figures 8 et 9, on insère d'abord le module de calage dans la rainure du rail support 12 de manière à plaquer le berceau 20 contre le fond du rail. La mise en place du panneau 11 s'opère ensuite après installation du ou des modules de calage.

On oriente le panneau 11 à la main afin de le positionner correctement, notamment en alignement par rapport à un référentiel prédéterminé.

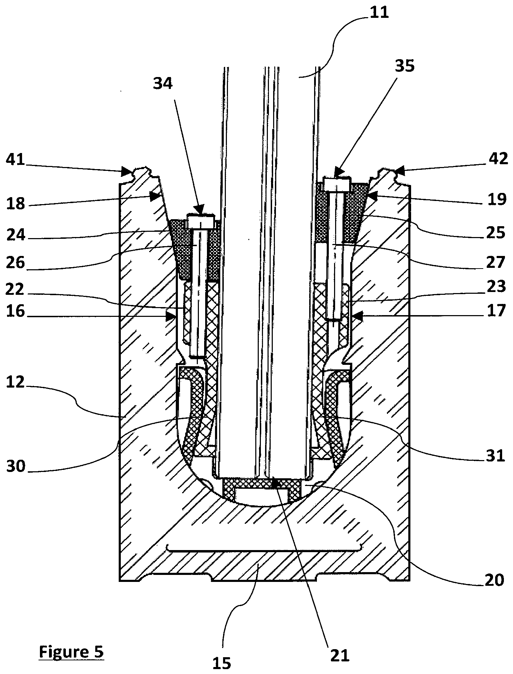

Sur la figure 5, le réglage angulaire du panneau 11 est opéré par vissage ou dévissage des vis de réglage 26, 27 provoquant un mouvement de basculement du berceau 20 dans un sens prédéterminé pour permettre l'alignement longitudinal des panneaux en verre lors de la pose. L'amplitude de basculement du berceau 20 est très faible, de l'ordre de +/- 1° par rapport au plan médian vertical, grâce à la venue en butée des premières cales 22, 23 contre l'une des deux faces latérales de la rainure 14. On voit sur la figure 5 que le dévissage de la vis 27 permet la montée de la cale 25 de droite, et le vissage de la vis 26 entraîne la descente de la cale 24 de gauche. Dans ce cas, le panneau 11 bascule légèrement dans le sens des aiguilles d'une montre.

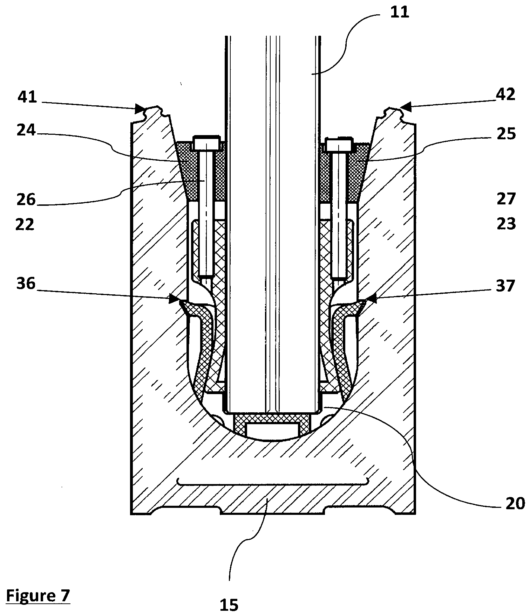

Sur la figure 4, des butées 36, 37 sont configurées pour empêcher la remontée du berceau 20 lors du serrage des vis de réglage 26, 27. Les butées 36, 37 sont formées par des protubérances solidaires des faces latérales de la rainure 14 du rail. Sur la figure 7, les butées 36, 37 sont inversées par rapport à la figure 4, car elles sont formées par des extensions du berceau 20 susceptibles de s'engager dans des encoches ménagées dans les parois latérales de la rainure 14.

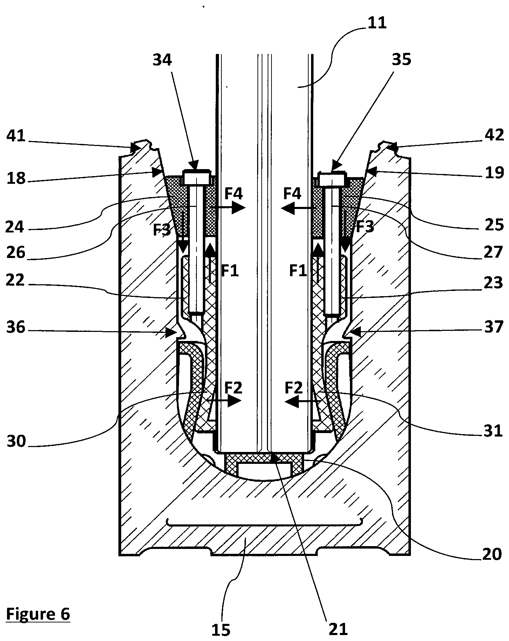

Après réglage de la verticalité, intervient le blocage du panneau 11 dans la position ajustée (figure 6). Le vissage des deux vis 26, 27 est effectué de part et d'autre du panneau 11 de manière à obtenir un serrage progressif dans la rainure 14 du profilé. Les premières cales de positionnement 22, 23 remontent dans le sens des flèches F1, ce qui provoque un rattrapage des jeux et un serrage du panneau 11 en partie basse suite à la pression exercée par les extensions 30, 31 (voir flèches F2). Lors du vissage se produit simultanément la descente des deuxièmes cales de positionnement 24, 25 le long des rampes 18, 19 (voir flèches F3), ce qui entraîne une compression et un serrage bilatéral du panneau 11 en partie haute du profilé (flèches F4). Le panneau 11 est maintenu manuellement en place pendant cette opération finale de serrage.

Le panneau 11 est parfaitement fixé et calé verticalement dans la rainure 14 dans la position souhaitée. La partie supérieure du rail support 12 peut ensuite être fermée par un capot 38, 39 (figure 1) avec mise en place d'un joint 40 d'étanchéité, lequel prend appui sur les deux faces opposées du panneau 11 en verre. Le capot 38, 39 est de préférence encliqueté sur des protubérances 41, 42 ménagées au sommet du deux ailes du profilé.

## Revendications

1. Dispositif de fixation (13) d'un panneau (11) dans une rainure (14) de réception d'un rail support (12) en forme de profilé en U s'étendant dans la direction longitudinale, ledit dispositif comprenant des moyens de calage coopérant avec deux vis de réglage (26, 27) pour assurer le maintien vertical du panneau (11) dans la rainure (14) du rail support (12), ladite rainure (14) en U étant équipée d'un fond arrondi, et de deux rampes (18, 19) divergentes disposées au sommet des deux ailes opposées du profilé,
- les moyens de calage ayant un berceau (20) enfourchant le chant inférieur du panneau (11) pour épouser la forme conjuguée du fond de la rainure (14) en autorisant un mouvement de basculement de faible amplitude lors du réglage angulaire,
**caractérisé en ce que** les moyens de calage comportent de chaque côté du panneau (11), une première et une deuxième cale de positionnement (22, 23 ; 24, 25), ladite première cale de positionnement (22, 23) de chaque côté coopérant avec le berceau (20), et ladite deuxième cale de positionnement (24, 25) de chaque côté étant apte à se déplacer le long de la rampe (18, 19) correspondante pour le serrage bilatéral du panneau après ledit réglage.

2. Dispositif de fixation selon la revendication 1, **caractérisé en ce que** la première cale de positionnement (22, 23) comprend un orifice taraudé dans lequel est prémontée la partie filetée de la vis de réglage (26, 27), et une extension (30, 31) engagée verticalement dans une rampe (32, 33) ménagée dans chacune des deux ailes du berceau (20).

3. Dispositif de fixation selon la revendication 2, **caractérisé en ce que** la vis de réglage (26, 27) traverse la deuxième cale de positionnement (24, 25), laquelle comporte un lamage de logement de la tête de vis.

4. Dispositif de fixation selon l'une des revendications précédentes, **caractérisé en ce que** les deux cales de positionnement sont séparées verticalement l'une de l'autre par un espace (28, 29) de chaque côté du panneau (11), de manière à se déplacer par coulissement selon deux sens opposés lors du serrage de la vis de réglage (26, 27).

5. Dispositif de fixation selon l'une des revendications précédentes, **caractérisé en ce que** le berceau (20) et les cales de positionnement (22, 23 ; 24, 25) sont réalisés en matière plastique.

6. Dispositif de fixation selon l'une des revendications précédentes, **caractérisé en ce que** l'amplitude de basculement du berceau (20) est limitée par la mise en engagement des premières cales de positionnement (22, 23) contre les deux faces latérales de la rainure (14), et que des butées (36, 37) sont configurées pour empêcher la remontée du berceau (20) lors du serrage des vis de réglage (26, 27).

7. Garde-corps (10) comprenant un panneau (11) inséré dans un rail support (12), **caractérisé en ce que** le panneau (11) est maintenu dans le rail support (12) au moyen d'un dispositif de fixation selon l'une des revendications 1 à 6.

8. Garde-corps selon la revendication 7, **caractérisé en ce que** le berceau (20) et les deux paires de cales de positionnement (22, 23 ; 24, 25) constituent avec les deux vis de réglage (26, 27) un module de calage, et que le nombre de modules de calage est variable en fonction de la longueur du panneau (11).

9. Garde-corps selon la revendication 8, **caractérisé en ce que** le ou les modules de calage sont prémontés à la partie inférieure du panneau (11) avant l'insertion dans la rainure du profilé.

10. Garde-corps selon la revendication 8, **caractérisé en ce que** le ou les modules de calage sont insérés dans la rainure (14) du rail support (12) avant la mise en place du panneau (11).

## Patentansprüche

1. Vorrichtung (13) zur Befestigung eines Paneels (11) in einer Aufnahmenut (14) einer Halteschiene (12) in der Form eines sich in Längsrichtung erstreckenden U-Profils, wobei die Vorrichtung Einstellmittel umfasst, die mit zwei Regulierungsschrauben (26, 27) zusammenwirken, um den vertikalen Halt des Paneels (11) in der Nut (14) der Halteschiene (12) sicherzustellen, wobei die U-förmige Nut (14) mit einem abgerundeten Boden und mit zwei auseinanderlaufenden Rampen (18, 19) versehen ist, die am Scheitel der beiden gegenüberliegenden Flügel des Profils angeordnet sind,
- wobei die Einstellmittel eine Wiege (20) aufweisen, welche die untere Kante des Paneels (11) umschließt, um sich an die zugeordnete Form des Bodens der Nut (14) anzupassen, wobei eine Schwenkbewegung mit schmaler Amplitude bei der Winkelregulierung gestattet wird,
**dadurch gekennzeichnet, dass** die Einstellmittel auf jeder Seite des Paneels (11) einen ersten und einen zweiten Positionierungskeil (22, 23; 24, 25) umfassen, wobei der erste Positionierungskeil (22, 23) jeder Seite mit der Wiege (20) zusammenwirkt, und der zweite Positionierungskeil (24, 25) jeder Seite geeignet ist, sich entlang der entsprechenden Rampe (18, 19) für ein beidseitiges Festziehen des Paneels nach der Regulierung zu verschieben.

2. Befestigungsvorrichtung nach Anspruch 1, **dadurch gekennzeichnet, dass** der erste Positionierungskeil (22, 23) eine Gewindeöffnung, in welcher der Gewindeabschnitt der Regulierungsschraube (26, 27) vormontiert ist, und eine Verlängerung (30, 31) umfasst, die vertikal mit einer Rampe (32, 33) in Eingriff steht, welche in jedem der beiden Flügel der Wiege (20) aufgenommen ist.

3. Befestigungsvorrichtung nach Anspruch 2, **dadurch gekennzeichnet, dass** die Regulierungsschraube (26, 27) den zweiten Positionierungskeil (24, 25) durchquert, der eine Senkung zur Aufnahme des Schraubenkopfs umfasst.

4. Befestigungsvorrichtung nach einem der vorhergehenden Ansprüche, **dadurch gekennzeichnet, dass** die beiden Positionierungskeile vertikal durch einen Raum (28, 29) auf jeder Seite des Paneels (11) voneinander getrennt sind, um sich durch Gleiten in zwei entgegengesetzten Richtungen beim Festziehen der Regulierungsschraube (26, 27) zu verschieben.

5. Befestigungsvorrichtung nach einem der vorhergehenden Ansprüche, **dadurch gekennzeichnet, dass** die Wiege (20) und die Positionierungskeile (22, 23; 24, 25) aus Kunststoffmaterial bestehen.

6. Befestigungsvorrichtung nach einem der vorhergehenden Ansprüche, **dadurch gekennzeichnet, dass** die Schwenkamplitude der Wiege (20) begrenzt wird, indem die ersten Positionierungskeile (22, 23) gegen die beiden lateralen Flächen der Nut (14) in Eingriff gebracht werden, und dass Anschläge (36, 37) ausgelegt sind, das Anheben der Wiege (20) beim Festziehen der Regulierungsschrauben (26, 27) zu verhindern.

7. Geländer (10), umfassend ein Paneel (11), das in eine Halteschiene (12) eingesetzt ist, **dadurch gekennzeichnet, dass** das Paneel (11) in der Halteschiene (12) durch eine Befestigungsvorrichtung nach einem der Ansprüche 1 bis 6 gehalten wird.

8. Geländer nach Anspruch 7, **dadurch gekennzeichnet, dass** die Wiege (20) und die beiden Paare von Positionierungskeilen (22, 23; 24, 25) mit den beiden Regulierungsschrauben (26, 27) ein Einstellmodul bilden, und dass die Anzahl von Einstellmodulen in Abhängigkeit von der Länge des Paneels (11) variabel ist.

9. Geländer nach Anspruch 8, **dadurch gekennzeichnet, dass** das oder die Einstellmodule in dem unteren Abschnitt des Paneels (11) vor dem Einsetzen in die Profilnut vormontiert ist oder sind.

10. Geländer nach Anspruch 8, **dadurch gekennzeichnet, dass** das oder die Einstellmodule in die Nut (14) der Halteschiene (12) vor der Platzierung des Paneels (11) eingesetzt wird oder werden.

## Claims

1. A fixing device (13) of a panel (11) in a receiving groove (14) of a support rail (12) in the form of a U-shaped section extending in the longitudinal direction, said device comprising wedging means collaborating with two adjustment screws (26, 27) to perform vertical securing of the panel (11) in the groove (14) of the support rail (12), said U-shaped groove (14) being equipped with a rounded bottom and with two divergent ramps (18, 19) arranged at the apex of the opposite two wings of the section,
- the wedging means having a cradle (20) straddling the bottom edge of the panel (11) to snugly follow the conjugate shape of the bottom of the groove (14) allowing a rocking movement of small amplitude when angular adjustment is performed,
**characterized in that** the wedging means comprise a first and a second positioning wedge (22, 23 ; 24, 25) on each side of the panel (11), said first positioning wedge (22, 23) of each side collaborating with said cradle (20), and said second positioning wedge (24, 25) of each side being able to move along the corresponding ramp (18, 19) for bilateral clamping of the panel after said adjustment.

2. The fixing device according to claim 1, wherein the first positioning wedge (22, 23) comprises a tapped aperture in which the threaded part of the adjustment screw (26, 27) is pre-assembled, and an extension (30, 31) engaged vertically along a ramp (32, 33) arranged in each of the two wings of the cradle (20).

3. The fixing device according to claim 2, wherein the adjustment screw (26, 27) passes through the second positioning wedge (24, 25) which comprises a counterbore housing the screw head.

4. The fixing device according to one of the preceding claims, wherein the two positioning wedges are separated vertically from one another by a space (28, 29) on each side of the panel (11) so as to move by sliding in two opposite directions when clamping of the adjustment screw (26, 27) is performed.

5. The fixing device according to one of the preceding claims, wherein the cradle (20) and the positioning wedges (22, 23 ; 24, 25) are made from plastic.

6. The fixing device according to one of the preceding claims, wherein the rocking amplitude of the cradle (20) is limited by the first positioning wedges (22, 23) coming into engagement against the two lateral surfaces of the groove (14), and stops (36, 37) are configured to prevent the cradle (20) from riding up when clamping of the adjustment screws (26, 27) is performed.

7. A guard rail (10) comprising a panel (11) inserted in a support rail (12), wherein the panel (11) is secured in the support rail (12) by means of a fixing device according to one of the claims 1 to 6.

8. The guard rail according to claim 7, wherein the cradle (20) and the two pairs of positioning wedges (22, 23 ; 24, 25) constitute a wedging module with the two adjustment screws (26, 27), and the number of wedging modules is variable according to the length of the panel (11).

9. The guard rail according to claim 8, wherein the wedging module or modules are pre-assembled on the bottom part of the panel (11) before insertion in the groove of the section.

10. The guard rail according to claim 8, wherein the wedging module or modules are inserted in the groove (14) of the support rail (12) before the panel (11) is fitted in place.
